# EUROPEAN PATENT SPECIFICATION

(11) **EP 3 687 145 B1**
(45) Date of publication and mention of the grant of the patent: **18.03.2026**
(21) Application number: 19153849.5
(22) Date of filing: 25.01.2019
(51) Int. Cl.: H04M 1/725, G06F 3/0484, G06F 3/0488, G06F 3/041, G06Q 50/00, G06Q 20/02, G06Q 20/22, G06Q 20/38

(54) **A DIGITAL COMMUNICATION SYSTEM AND METHOD INDICATING PRESSING TIME**
SYSTEM UND VERFAHREN ZUR DIGITALEN KOMMUNIKATION MIT ANZEIGE DER PRESSZEIT
SYSTÈME DE COMMUNICATION NUMÉRIQUE ET PROCÉDÉ D'INDICATION DU TEMPS DE PRESSAGE

(43) Date of publication of application: 29.07.2020
(73) Proprietor: Feelette Oy, 00560 Helsinki (FI)
(72) Inventor: PALOLA, Tuomas, FI-00950 Helsinki (FI); KANGAS, Lari, FI-00560 Helsinki (FI)
(74) Representative: Aaltonen, Janne Lari Antero

(56) References cited:
- WO-A1-2018/190809
- CN-A- 105 573 624
- US-A1- 2013 249 919
- US-A1- 2015 268 826
- US-A1- 2017 315 720

## Description

### Field of the invention

The present invention relates generally to digital communication between e.g. human beings or legal entities. For example, the invention relates to mobile device communication via internet.

### Background of the invention

Currently all social media communication includes emoticons as expressions of like, or as in Reddit like or dislike and thumbs up or thumbs down, etc. The Facebook has evolved from simple like thumbs up button to love heart, thankful flower, haha face, sad face and angry face, etc. Every other social media has followed. In Twitter communication have been used heart and retweet. Chats have hundreds of emoticons and they've become part of everyday communication in a same way as shortening of words used to be in text (SMS) messages. For example, in a SMS message can be written, this is 4U - for you, or I <3 U -I love you. Symbols like :) smile have been meaningful means of communication of moods - happiness or sadness.

Another evolution of social media has been heightened, even exponential expressions of like or dislike. This phenomena is most commonly known as social media rage. Negatives are more visible and popular than the positives. However, both distortions exist. For example, when a user posts an update of an outrage. The purpose of the posts is mostly to seek empathy, from the persons accepted as social media friends. Therefore, it's natural that a social media friend comments empathizing, thus heightening the feeling on the original post. Second friend then picks up where the first two left off, read the original post and the comment, wants to empathize, and to be noticed, and finds even stronger way to communicate than the first empathizer.

This leads the second person to comment even more strongly than the first person. Third comment is heightened even more to be noticed and consequently social media rage phenomena is created. Original posts feeling is exaggerated and social media outrage multiplied. This is an increasing problem in digital communication according to the prior art techniques.

In a document US20130249919A1, there is described a computer-readable storage medium having stored therein an input control program to be executed by a computer of an apparatus for displaying a message on a display apparatus in accordance with an input, the input control program causing the computer to execute receiving an input from an input apparatus; inputting a message on the basis of the input; setting a visual attribute of the message when confirmed and displayed on the display apparatus, by changing the visual attribute in accordance with a length of time during which a confirmation operation of confirming the message continues; and performing control so as to, when the confirmation operation has ended, confirm the message and display the confirmed message on the display apparatus on the basis of the visual attribute set at the end of the confirmation operation.

In another document US20150268826A1, there is described a method comprising detecting a user interaction with a graphical user interface; presenting a communication element in response to the detected user interaction; determining a characteristic of the user interaction with the graphical user interface; configuring, by at least one processor, the communication element based on the characteristic of the user interaction; and sending the configured communication element within an electronic communication.

In yet another document CN105573624A, there is described a method and system for rapidly completing text editing through the pressure touching technology. The text content information of a text editing area shown by a touching screen is selected in a pressing mode, and a cursor is generated; the pressing pressure value of the pressing cursor is sensed through a pressure sensing module, and when the pressing pressure value exceeds a default value, a processing module generates a pressure sensing triggering signal; the pressing times of the cursor in default time are computed through a counting module; according to the pressing times, the processing module determines a copying order or a cutting order to perform text content information copying or text content information cutting, a default text pasting area shown by the touching screen is clicked, the default text pasting area is pressed once in default time to generate a pasting touching signal, and the text content information is pasted according to the pasting touching signal.

### Short description of the invention

An object of the invention is a digital communication system and method that is practical and easy to use, and which gives a positive influence to a communication between users e.g. in social media. This is achieved by a digital communication system according to claim 1.

The focus of the invention is also a digital communication method according to claim 6.

The invention is based on that a first digital communication device comprises means for forming a message at least on the basis of a pressing time and and a pressing pressure, and said message comprises information related to the pressing time and the pressing pressure.

The digital communication system comprises means for transmitting said message from the first digital communication device to a second digital communication device, which presents said received message on the basis of said information related to said pressing time and pressing pressure.

A benefit of the invention is that it is easy to use, and gives a more personal communication feeling to the communication between the users thus preventing negative communication effects such as social media outrage from increasing. The invention also enables applications in which learning skills of the artificial intelligence systems and/or robots can be enhanced.

### Short description of the figures

- Figure 1:: presents a first embodiment of the digital communication according to the present invention.
- Figure 2:: presents a first embodiment of the digital communication according to the present invention.
- Figure 3:: presents a first embodiment of the digital communication according to the present invention.
- Figure 4:: presents a second embodiment of the digital communication according to the present invention.
- Figure 5:: presents an exemplary embodiment of the digital communication according to the present invention.

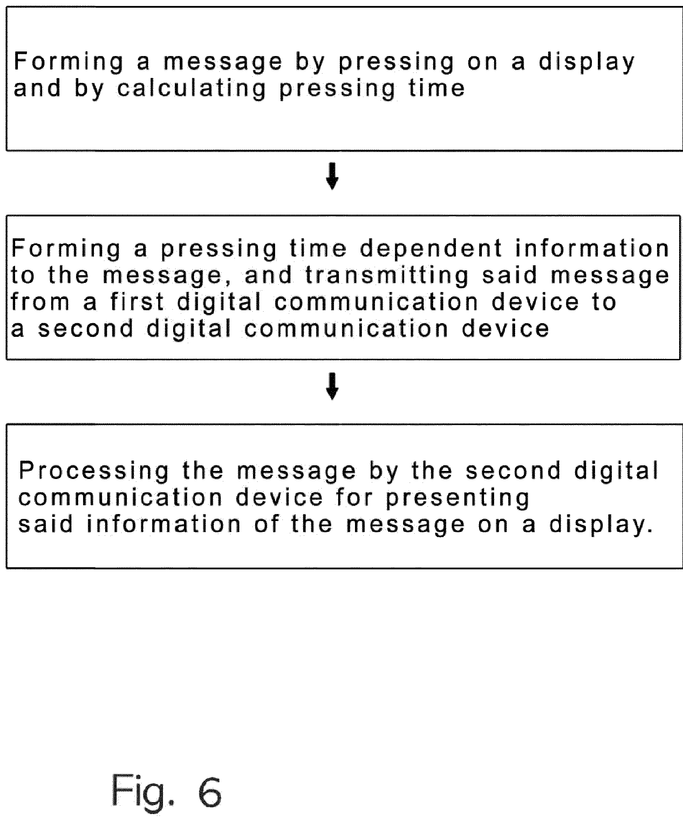

- Figure 6:: presents a method flowchart according to the present invention.

### Detailed description of the invention

According to the present invention can be arranged digital communication between users creating a means of reaction, which emphasizes with the previous post effectively, therefore disabling growth of social media rage or distortion of users' feelings otherwise. Communication of moods in social media is developed as scaling embodiments instead of prior art emoticons. The invention also enables novel and enhanced communication devices and methods to be utilized commercially e.g. in selling and marketing.

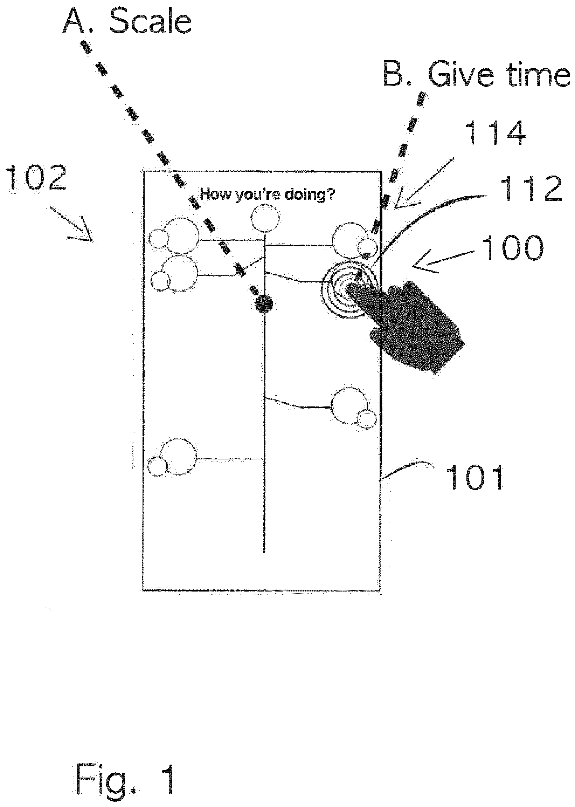

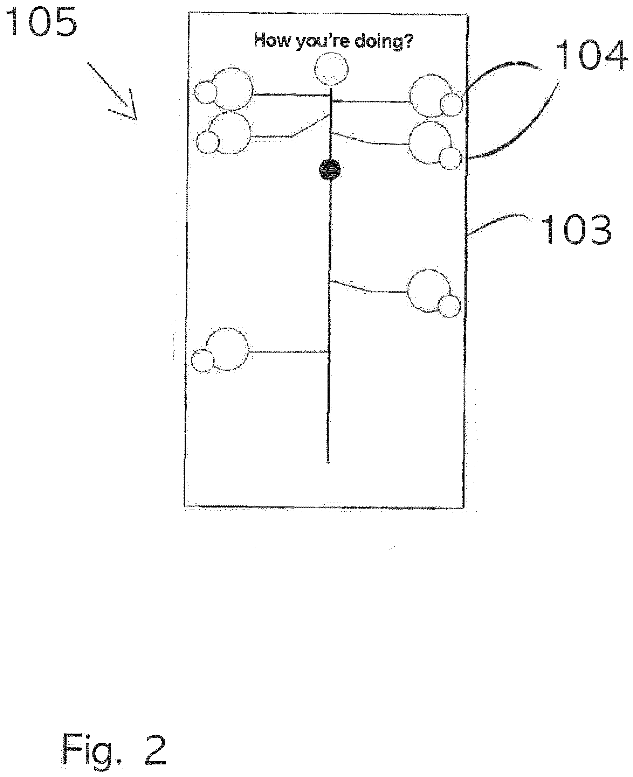

In figures 1-3 is presented a first embodiment according to the present invention, wherein a user can give time to a friend (other user) by using a digital communication device 101, 103 such as e.g. a mobile phone, a tablet, a computer, a television, an elevator, a refrigerator, a car, an augmented reality device, etc. The user can give time e.g. by touching friend's picture on a touch screen 106. The digital communication device 101, 103 comprises means 100 for forming a message on the basis of a pressing time and a pressing pressure. Said formed message comprises information related to said pressing time and pressing pressure. The means 100 works by recognizing user's different kinds of touches on the digital communication device, i.e. user's long press has a different meaning as a short press. The means 100 can also recognize where the user presses on the device's screen 112 (touch screen) and connects to various functions according to the pressing location 114. By pressing the friends' thumbnail or icon for example, for the desired time and pressure, the means 100 recognize the action to be done.

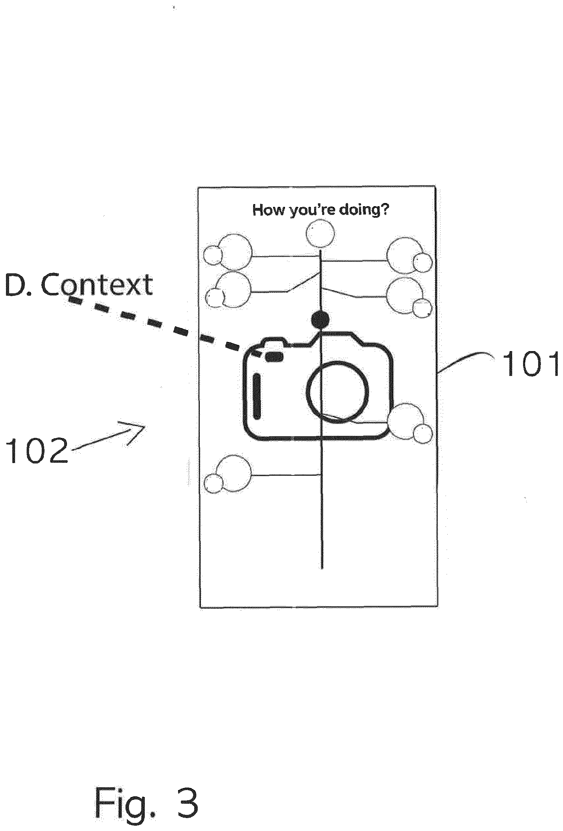

The given time can be linked to various messages which have ratings. The ratings have context (D in figure 3 ), which the time is given to. The context can be anything that can be presented with the digital communication device 101, 103, e.g. a photograph, a video, a sound, a text, an emoticon or vibration. The meaning to give time can therefore be feelings of sympathy or empathy to a post where feelings are low, simple harmony of the original posts feeling. And most importantly support or sharing of the joy, when the user has shared an elated feeling in their post. Giving time to your social media friend is therefore something very novel and impressing.

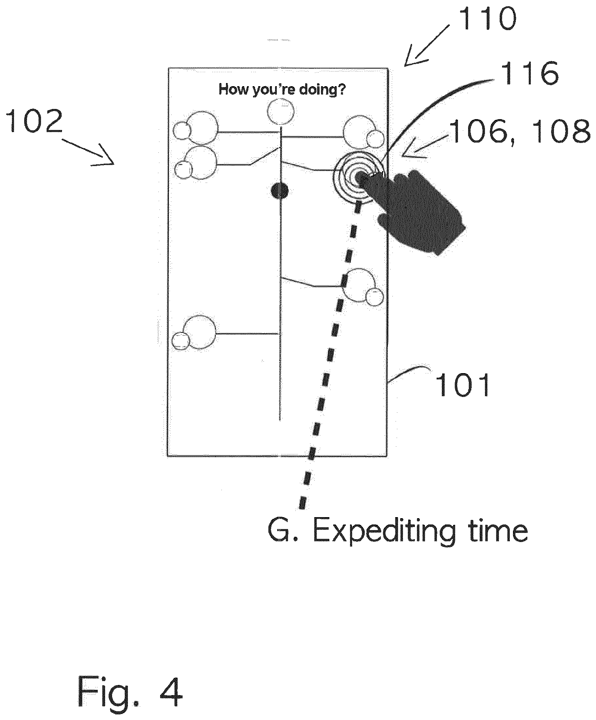

In figure 4 is presented second embodiment according to the present invention. The digital communication system comprises means 108 for forming a message on the basis of a pressing time and a pressing pressure. The message comprises information related to said pressing time and pressing pressure. This means e.g. that a hard press is differently processed according to the invention as a soft press. Performance of the means 106 and 108 can be combined and they calculate the time pressed and the pressing pressure 116 in order to interpret the feeling the user want to convey to the other user. The time pressed is calculated by the means 106, 108 in seconds, minutes, hours and days. Even broken seconds can be calculated in 1/1000 seconds, 1/100 seconds and 1/10 seconds. In one embodiment according to the invention moving the thumb on the touch screen after time-giving has started does not end the process, but only releasing does.

The digital communication system according to the invention can comprise means 108 for forming a message at least on the basis of a stepwise pressing pressure values. Said message comprises information depending on said different stepwise pressing pressure values. For example, pressing harder exaggerates the emotion communicated to the friend or another subject. Presses can for example be expedited (G in figure 4 ) by the scale of ten; 10%, 20%, 30%, until 100% exaggeration. Hardest press can expedite or multiply the time given e.g. by two times. Softer presses can multiply the time given again by the scale of tenth; by 1,1 or 1,2 or 1,3 or 1,4 until 2,0. According to this example with the hardest press on the screen will therefore exaggerate 30 second press to show 1 minute. Or with 1,5 level press in 30 seconds will increase to 45 seconds time given to the friend who receives the message.

In the embodiments according to the present invention, the screen can also be a display in all its possible meanings.

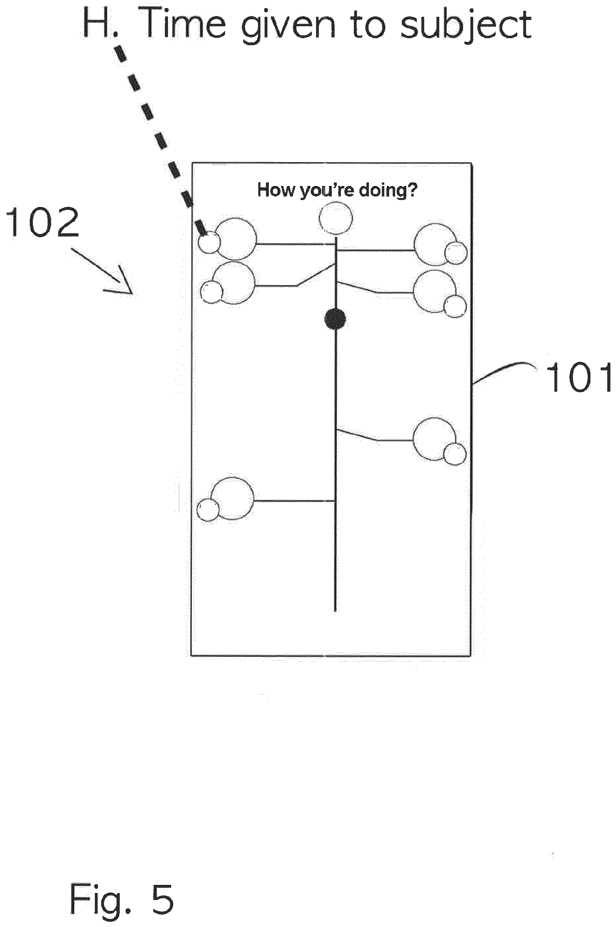

In embodiments according to the invention can also be other users than real persons. As users can be e.g. institutional subjects or artificial intelligence or other internet of things (IoT) or any other account holders in an application. Also, users can be advertisers, promoters or any other legal entity other than real persons. Time given (H in figure 5) can for example be a movie or a game, or sections of a movie or a game, which is promoted by a service provider and users can therefore give it time. Time given can thereafter be interpreted as expressions of love or like or support, or dislike, to the promoted context. Communication can therefore also be to a legal entity such as an artistic copyright: e.g. a painting, an installation or another piece of art. Thereafter, when time is given, the program sends the communication and the friend or another object on the program receives it. The user can give it context specific, depending on the rating given, or without a reason. What is transmitted is those seconds or minutes from my pressing the icon to you into your specific post and your profile. It is left to the users to interpret what does those seconds or minutes of time, or the gusto of the press mean. The program simply calculates and transmits the time and the force of the press, and interprets it as time given.

Consequently, it all becomes a game. The users interest is peaked by questions, whether they have given the user time. Why has this person or entity given me time, and how much? What is the purpose of the hard press and do I understand that press in the context of the original update or not? Is this time too much to give? Are there hidden agendas or is that time giving genuinely celebrating my ups and downs, my feelings, my moods? Time giving according to the invention can lure users to interact in other means of communication on the application, or simply to give time back. It is not only one, but two-way communication between the users.

Empathizing in social media becomes efficient to cut the cycle of social media rage phenome. Time given to a context according to the present invention does not cause the second or third commenters needing to exaggerate in empathizing as stated in the prior art problem. Or should the need arise to empathize more than the first comment, giving time more does not constitute social media rage or instigate it from third parties.

In figure 5 is illustrated different amounts of given time allocated to different users. Interpretation aside, what is a fact, is that your user friend, real person, person or not, gave you certain number of seconds of his or her time, pressed on the screen with certain force and pointed this action to a specific place on the screen, namely your profile picture? It is like touching a person virtually. The questions follow, are the time given context specific or generally to me? Does he or she or it like me that much, does he sympathize with me or my post, the context, or what is the purpose of that action? These questions can be instigated intentionally and for commercial gain, making also commercials on the platform possible and very effective.

Giving time digitally is a novel form of communication. Context specific or non-context specific communication between entities, including persons, legal entities or e.g. artificial intelligence robots, in mobile devices or in other parts of IoT (Internet of Things) system. In figures 1-5 are presented preferred embodiments according to the present invention, and they are summarized herein. A digital communication system comprises a digital communication device 101 of a first user and a digital communication device 103 of second user. The user of the digital communication device 101, 103 can be e.g. a human person, a legal entity, an artificial intelligence system or a device in IoT (Internet of Things) system. The digital communication device 101,103 can be e.g. a mobile device (a mobile phone, a tablet, a computer, a car, an augmented reality device, etc), and the digital communication system is e.g. an internet program used via internet. The digital communication device comprises means 100 for forming a message on the basis of a pressing time and a pressing pressure. The message comprises information related to said pressing time and pressing pressure. Also the digital communication system can comprise means 108 for forming a message at least on the basis of a stepwise pressing pressure values, wherein the message comprises information depending on said different stepwise pressing pressure values. In one preferred embodiment the digital communication system can comprise means 110 for identifying an action to be done on the basis of a pressing time or pressing pressure or stepwise pressing pressure or on the basis of a combination of some of or all of them. The digital communication system comprises means 102 for transmitting said message from the first digital communication device 101 to the second digital communication device 103 or vice versa, and means 105 for receiving said message from the other digital communication device 101, 103. Most often said transmission is performed in a wireless communication, and the means 102, 105 for transmitting and receiving can be any means suitable for performing such functions, e.g. transmission and receiving means used in mobile device communication.

In the preferred embodiments the communication system comprises means 104 for presenting said received message on the basis of said information related to pressing time and pressing pressure. The means 104 are configured for presenting context of said received message to which time is being given to.

The presented means 100, 104, 106, 108, 110 for performing different kind of tasks according to the present invention can be carried out programmatically by utilizing e.g. algorithm techniques and/or programs by means of data processor techniques and data processors such as e.g. computers. Means 100 comprise measuring and calculation means for measuring and calculating time pressed e.g. on the touch screen. Means 104, 106, 108, 110 comprise measuring and calculation means for measuring and calculating time and/or pressure pressed e.g. on the touch screen.

In the following is furthermore described different kind of embodiments according to the presented communication invention: A human being (first user) can communicate with an elevator (second user) e.g. to give feedback to the elevator company. A human being (first user) can communicate with a refrigerator (second user) e.g. so that the refrigerator will learn preferences and behavior of the person in order to send recommendations to the person so that he or she remembers to go shopping, and also a shopping list can be provided to the person by the refrigerator. In this example a new kind of special relationship can be build up between the human being and the refrigerator. This relationship can be linked e.g. to the personal health application, and even a personal trainer or a doctor can be involved with the application, or an artificial intelligence robot, which learns to behave like the personal trainer or the doctor. In the embodiments according to the invention can be brought novel methods to communication between the person or non-person users in order to develop e.g. more practical IoT (Internet of Things) applications. The invention also enables applications in which learning skills of the artificial intelligence systems and/or robots can be developed and enhanced.

Time sharing over internet of things is processed between humans or between humans and machines, or between machines themselves. Time sharing is a new way of communicating where different parties take time from their lives to share it with another. This time away from something else can be interpreted in various ways by the receiver, and this understanding between the person sharing and receiving creates the said new communication.

In one exemplary embodiment according to the present invention the new way of digital communication, sharing time, can be verified between the parties. In prior art systems e.g. a fake person or account could potentially enter the communication between two parties and distort the message. A system of verification of the transmitted message can be achieved according to the present invention in order to create more trust into the system of time sharing. Blockchain method can used to verify and authenticate the communication from one party to another.

A blockchain, originally block chain, is a growing list of records, called blocks, which are linked using cryptography. Each block contains a cryptographic hash of the previous block, a timestamp, and transaction data (generally represented as a merkle tree root hash).

By design, a blockchain is resistant to modification of the data. It is "an open, distributed ledger that can record transactions between two parties efficiently and in a verifiable and permanent way". For use as a distributed ledger, a blockchain is typically managed by a peer-to-peer network collectively adhering to a protocol for inter-node communication and validating new blocks. Once recorded, the data in any given block cannot be altered retroactively without alteration of all subsequent blocks, which requires consensus of the network majority. Although blockchain records are not unalterable, blockchains may be considered secure by design and exemplify a distributed computing system with high Byzantine fault tolerance. Decentralized consensus has therefore been claimed with a blockchain.

A blockchain is a decentralized, distributed and public digital ledger that is used to record transactions across many computers so that any involved record cannot be altered retroactively, without the alteration of all subsequent blocks. This allows the participants to verify and audit transactions independently and relatively inexpensively. A blockchain database is managed autonomously using a peer-to-peer network and a distributed timestamping server. They are authenticated by mass collaboration powered by collective self-interests. Such a design facilitates robust workflow where participants' uncertainty regarding data security is marginal. The use of a blockchain removes the characteristic of infinite reproducibility from a digital asset. It confirms that each unit of value was transferred only once, solving the longstanding problem of double spending. A blockchain has been described as a value-exchange protocol. A blockchain can maintain title rights because, when properly set up to detail the exchange agreement, it provides a record that compels offer and acceptance.

In the exemplary embodiment according to the present invention the digital communication system comprises a first digital communication device for creating a time sharing message as a ledger. The digital communication system is configured to enter the message into blockchain, and to verify the message by a peer-to-peer network and a distributed timestamping server. The digital communication system also comprises a second digital communication device for receiving the verified message of time shared from the first digital communication device.

It is expressly intended that all combinations of those elements which perform substantially the same results are within the scope of the invention. Substitutions of the elements from one described embodiment to another are also fully intended and contemplated.

It is also to be understood that the drawings are not necessarily drawn to scale but they are merely conceptual in nature. It is the intention, therefore, to be limited only as indicated by the scope of the claims appended hereto.

## Claims

1. A digital communication system comprising a first digital communication device (101) of a first user and a second digital communication device (103) of a second user, wherein
(a) a processor of the first digital communication device is configured to form a message by recognizing a pressing on a display of the first digital communication device and by calculating a pressing time and a pressing pressure of the pressing, said message comprising information related to the pressing time and the pressing pressure, and the first digital communication device comprises a transmitter (102) for transmitting said message from the first digital communication device to the second digital communication device, wherein the display of the first digital communication device is a touch screen, and wherein the pressing on the display of the first digital communication device is applied on a displayed icon or thumbnail related to the second digital communication device;
(b) the second digital communication device comprises a receiver (105) for receiving said transmitted message, and a processor and a display (104) for presenting the received message on the basis of said information related to the pressing time and the pressing pressure.

2. The digital communication system according to claim 1, **characterized, in that** the processor of the first digital communication device (101) is configured to form the message on the basis of the pressing time, the pressing pressure of the pressing and stepwise pressing pressure values, said message comprising stepwise pressing pressure values information, wherein the stepwise pressing pressure values indicate a scale by which the pressing time is to be multiplied.

3. The digital communication system according to claim 1, **characterized, in that** the digital communication system comprises a calculating unit (110) for identifying an action to be done at least on the basis of one of pressing time and pressing pressure.

4. The digital communication system according to claim 1, **characterized, in that** the first digital communication device (101) and/or the second digital communication device (103) are at least one of the set consisting of a mobile phone, a tablet, a computer, a television, an elevator, a refrigerator, a car, and an augmented reality device.

5. The digital communication system according to claim 1, **characterized, in that** the digital communication system comprises the first digital communication device (101) for creating a time sharing message as a ledger, and the digital communication system is configured to enter the message into blockchain, and to verify the message by a peer-to-peer network and a distributed timestamping server, and the digital communication system comprises the second digital communication device (103) for receiving the verified message of time shared from the first digital communication device.

6. A digital communication method comprising the steps of
(a) forming, at a first digital communication device (101) of a first user, a message by recognizing a pressing on a display of the first digital communication device and by calculating a pressing time and a pressing pressure of the pressing, wherein the message includes information related to the pressing time and the pressing pressure, wherein the display of the first digital communication device is a touch screen, and wherein the pressing on the display of the first digital communication device is applied on a displayed icon or thumbnail related to the second digital communication device;
(b) transmitting said message from the first digital communication device to the second digital communication device (103) of a second user;
(c) receiving said transmitted message and processing the message by a processor integrated with the second digital communication (103) device for presenting the message on the basis of said information related to the pressing time and the pressing pressure on a display of the second digital communication device.

7. The digital communication method according to claim 6, further **characterized, by** calculating stepwise pressing pressure values along-with calculating the pressing time and the pressing pressure of the pressing, and said method further comprising stepwise pressing pressure information, wherein the stepwise pressing pressure values indicate a scale by which the pressing time is to be multiplied.

8. The digital communication method according to claim 6, further **characterized, by** identifying an action to be done at least on the basis of one of the pressing time and the pressing pressure.

9. The digital communication method according to claim 6, further **characterized, in that** the first digital communication device and/or the second digital communication device are at least one of a set consisting of mobile phone, a tablet, a computer, a television, an elevator, a refrigerator, a car, and an augmented reality device.

10. The digital communication method according to claim 6, further **characterized, in that** in the method the first user creates a time sharing message as a ledger using the first digital communication device (101), enters the message into blockchain, and the message is verified by a peer-to-peer network and a distributed timestamping server, and the second user receives the verified message of time shared from the first user using the second digital communication device (103).

## Patentansprüche

1. Digitales Kommunikationssystem, umfassend eine erste digitale Kommunikationsvorrichtung (101) eines ersten Benutzers und eine zweite digitale Kommunikationsvorrichtung (103) eines zweiten Benutzers, wobei
(a) ein Prozessor der ersten digitalen Kommunikationsvorrichtung konfiguriert ist, um eine Nachricht durch ein Erkennen eines Drückens auf eine Anzeige der ersten digitalen Kommunikationsvorrichtung und durch ein Berechnen einer Drückzeit und eines Drückdrucks des Drückens auszubilden, die Nachricht umfassend Informationen bezüglich der Drückzeit und des Drückdrucks, und wobei die erste digitale Kommunikationsvorrichtung einen Sender (102) zum Senden der Nachricht von der ersten digitalen Kommunikationsvorrichtung zu der zweiten digitalen Kommunikationsvorrichtung umfasst, wobei die Anzeige der ersten digitalen Kommunikationsvorrichtung ein Berührungsbildschirm ist, und wobei das Drücken auf die Anzeige der ersten digitalen Kommunikationsvorrichtung auf ein angezeigtes Symbol oder eine Miniaturansicht bezüglich der zweiten digitalen Kommunikationsvorrichtung angewendet wird;
(b) die zweite digitale Kommunikationsvorrichtung einen Empfänger (105) zum Empfangen der gesendeten Nachricht und einen Prozessor und eine Anzeige (104) zum Darstellen der empfangenen Nachricht auf der Basis der Informationen bezüglich der Drückzeit und des Drückdrucks umfasst.

2. Digitales Kommunikationssystem nach Anspruch 1,
**dadurch gekennzeichnet, dass** der Prozessor der ersten digitalen Kommunikationsvorrichtung (101) konfiguriert ist, um die Nachricht auf der Basis der Drückzeit, des Drückdrucks des Drückens und stufenweiser Drückdruckwerte auszubilden, die Nachricht umfassend Informationen über stufenweise Drückdruckwerte, wobei die stufenweisen Drückdruckwerte eine Skala angeben, mit der die Drückzeit zu multiplizieren ist.

3. Digitales Kommunikationssystem nach Anspruch 1,
**dadurch gekennzeichnet, dass** das digitale Kommunikationssystem eine Berechnungseinheit (110) zum Identifizieren einer durchzuführenden Aktion mindestens auf der Basis einer der Drückzeit und des Drückdrucks umfasst.

4. Digitales Kommunikationssystem nach Anspruch 1,
**dadurch gekennzeichnet, dass** die erste digitale Kommunikationsvorrichtung (101) und/oder die zweite digitale Kommunikationsvorrichtung (103) mindestens eines aus dem Satz ist, bestehend aus einem Mobiltelefon, einem Tablet, einem Computer, einem Fernsehgerät, einem Aufzug, einem Kühlschrank, einem Kraftfahrzeug und einer Augmented-Reality-Vorrichtung.

5. Digitales Kommunikationssystem nach Anspruch 1,
**dadurch gekennzeichnet, dass** das digitale Kommunikationssystem die erste digitale Kommunikationsvorrichtung (101) zum Erstellen einer Zeitteilungsnachricht als ein Register umfasst, und das digitale Kommunikationssystem konfiguriert ist, um die Nachricht in eine Blockchain einzugeben und die Nachricht durch ein Peer-to-Peer-Netzwerk und einen verteilten Zeitstempelserver zu verifizieren, und das digitale Kommunikationssystem die zweite digitale Kommunikationsvorrichtung (103) zum Empfangen der verifizierten Nachricht geteilter Zeit von der ersten digitalen Kommunikationsvorrichtung umfasst.

6. Digitales Kommunikationsverfahren umfassend die Schritte
(a) Ausbilden, an einer ersten digitalen Kommunikationsvorrichtung (101) eines ersten Benutzers, einer Nachricht durch das Erkennen eines Drückens auf eine Anzeige der ersten digitalen Kommunikationsvorrichtung und durch das Berechnen einer Drückzeit und eines Drückdrucks des Drückens, wobei die Nachricht Informationen bezüglich der Drückzeit und des Drückdrucks umfasst, wobei die Anzeige der ersten digitalen Kommunikationsvorrichtung ein Berührungsbildschirm ist, und wobei das Drücken auf die Anzeige der ersten digitalen Kommunikationsvorrichtung auf ein angezeigtes Symbol oder eine Miniaturansicht bezüglich der zweiten digitalen Kommunikationsvorrichtung angewendet wird;
(b) Senden der Nachricht von der ersten digitalen Kommunikationsvorrichtung zu der zweiten digitalen Kommunikationsvorrichtung (103) eines zweiten Benutzers;
(c) Empfangen der gesendeten Nachricht und Verarbeiten der Nachricht durch einen Prozessor, der mit der zweiten digitalen Kommunikationsvorrichtung (103) integriert ist, zum Darstellen der Nachricht auf der Basis der Informationen bezüglich der Drückzeit und des Drückdrucks auf einer Anzeige der zweiten digitalen Kommunikationsvorrichtung.

7. Digitales Kommunikationsverfahren nach Anspruch 6, ferner **gekennzeichnet durch** das schrittweise Berechnen von Drückdruckwerten zusammen mit dem Berechnen der Drückzeit und des Drückdrucks des Drückens, und das Verfahren ferner umfassend schrittweise Drückdruckinformationen, wobei die schrittweisen Drückdruckwerte eine Skala angeben, mit der die Drückzeit zu multiplizieren ist.

8. Digitales Kommunikationsverfahren nach Anspruch 6, ferner **gekennzeichnet durch** das Identifizieren einer durchzuführenden Aktion mindestens auf der Basis einer der Drückzeit und des Drückdrucks.

9. Digitales Kommunikationsverfahren nach Anspruch 6, ferner **dadurch gekennzeichnet, dass** die erste digitale Kommunikationsvorrichtung und/oder die zweite digitale Kommunikationsvorrichtung mindestens eines aus dem Satz ist, bestehend aus Mobiltelefon, einem Tablet, einem Computer, einem Fernsehgerät, einem Aufzug, einem Kühlschrank, einem Kraftfahrzeug und einer Augmented-Reality-Vorrichtung.

10. Digitales Kommunikationsverfahren nach Anspruch 6, ferner **dadurch gekennzeichnet, dass** in dem Verfahren der erste Benutzer eine Zeitteilungsnachricht als ein Register unter Verwendung der ersten digitalen Kommunikationsvorrichtung (101) erstellt, die Nachricht in die Blockchain eingibt, und die Nachricht durch ein Peer-to-Peer-Netzwerk und einen verteilten Zeitstempelserver verifiziert wird, und der zweite Benutzer die verifizierte Nachricht geteilter Zeit von dem ersten Benutzer unter Verwendung der zweiten digitalen Kommunikationsvorrichtung (103) empfängt.

## Revendications

1. Système de communication numérique comprenant un premier dispositif de communication numérique (101) d'un premier utilisateur et un second dispositif de communication numérique (103) d'un second utilisateur, dans lequel
(a) un processeur du premier dispositif de communication numérique est configuré pour former un message en reconnaissant un appui sur un afficheur du premier dispositif de communication numérique et en calculant un temps d'appui et une pression d'appui de l'appui, ledit message comprenant des informations relatives au temps d'appui et à la pression d'appui, et le premier le dispositif de communication numérique comprend un transmetteur (102) permettant de transmettre ledit message à partir du premier dispositif de communication numérique au second dispositif de communication numérique, dans lequel l'afficheur du premier dispositif de communication numérique est un écran tactile, et dans lequel l'appui sur l'afficheur du premier dispositif de communication numérique est appliqué sur une icône ou une imagette affichée liée au second dispositif de communication numérique ;
(b) le second dispositif de communication numérique comprend un récepteur (105) permettant de recevoir ledit message transmis, et un processeur et un afficheur (104) permettant de présenter le message reçu sur la base desdites informations relatives au temps d'appui et à la pression d'appui.

2. Système de communication numérique selon la revendication 1, **caractérisé en ce que** le processeur du premier dispositif de communication numérique (101) est configuré pour former le message sur la base du temps d'appui, la pression d'appui des valeurs de pression d'appui et d'appui par étapes, ledit message comprenant des informations de valeurs de pression d'appui par étapes, dans lequel les valeurs de pression d'appui par étapes indiquent une échelle par laquelle le temps d'appui doit être multiplié.

3. Système de communication numérique selon la revendication 1, **caractérisé en ce que** le système de communication numérique comprend une unité de calcul (110) permettant d'identifier une action à effectuer au moins sur la base de l'un parmi un temps d'appui et une pression d'appui.

4. Système de communication numérique selon la revendication 1, **caractérisé en ce que** le premier dispositif de communication numérique (101) et/ou le second dispositif de communication numérique (103) sont au moins l'un parmi l'ensemble constitué d'un téléphone portable, d'une tablette, d'un ordinateur, d'un téléviseur, d'un ascenseur, d'un réfrigérateur, d'une voiture et d'un dispositif de réalité augmentée.

5. Système de communication numérique selon la revendication 1, **caractérisé en ce que** le système de communication numérique comprend le premier dispositif de communication numérique (101) permettant de créer un message de partage de temps en tant que registre, et le système de communication numérique est configuré pour entrer le message dans une chaîne de blocs, et pour vérifier le message par un réseau poste-à-poste et un serveur d'estampille temporelle distribué, et le système de communication numérique comprend le second dispositif de communication numérique (103) permettant de recevoir le message vérifié de temps partagé à partir du premier dispositif de communication numérique.

6. Procédé de communication numérique comprenant les étapes consistant à
(a) former, au niveau d'un premier dispositif de communication numérique (101) d'un premier utilisateur, un message en reconnaissant un appui sur un afficheur du premier dispositif de communication numérique et en calculant un temps d'appui et une pression d'appui de l'appui, dans lequel le message comporte des informations relatives au temps d'appui et à la pression d'appui, dans lequel l'afficheur du premier dispositif de communication numérique est un écran tactile, et dans lequel l'appui sur l'afficheur du premier dispositif de communication numérique est appliqué sur une icône ou une imagette affichée liée au second dispositif de communication numérique ;
(b) transmettre ledit message à partir du premier dispositif de communication numérique au second dispositif de communication numérique (103) d'un second utilisateur ;
(c) recevoir ledit message transmis et traiter le message par un processeur intégré au second dispositif de communication numérique (103) permettant de présenter le message sur la base desdites informations relatives au temps d'appui et à la pression d'appui sur un afficheur du second dispositif de communication numérique.

7. Procédé de communication numérique selon la revendication 6, en outre **caractérisé par** le calcul de valeurs de pression d'appui par étapes en même temps que le calcul du temps d'appui et de la pression d'appui de l'appui, et ledit procédé comprenant en outre des informations de pression d'appui par étapes, dans lequel les valeurs de pression d'appui par étapes indiquent une échelle par laquelle le temps d'appui doit être multiplié.

8. Procédé de communication numérique selon la revendication 6, en outre **caractérisé par** l'identification d'une action à effectuer au moins sur la base de l'un parmi le temps d'appui et la pression d'appui.

9. Procédé de communication numérique selon la revendication 6, en outre **caractérisé en ce que** le premier dispositif de communication numérique et/ou le second dispositif de communication numérique sont au moins l'un parmi un ensemble constitué d'un téléphone portable, d'une tablette, d'un ordinateur, d'un téléviseur, d'un ascenseur, d'un réfrigérateur, d'une voiture et d'un dispositif de réalité augmentée.

10. Procédé de communication numérique selon la revendication 6, en outre **caractérisé en ce que**, dans le procédé, le premier utilisateur crée un message de partage de temps en tant que registre à l'aide du premier dispositif de communication numérique (101), entre le message dans une chaîne de blocs, et le message est vérifié par un réseau poste-à-poste et un serveur d'estampille temporelle distribué, et le second utilisateur reçoit le message vérifié de temps partagé à partir du premier utilisateur à l'aide du second dispositif de communication numérique (103).
